# EUROPÄISCHE PATENTANMELDUNG

(11) **EP 1 059 025 A2**
(43) Veröffentlichungstag der Anmeldung: **13.12.2000**
(21) Anmeldenummer: 00108589.3
(22) Anmeldetag: 20.04.2000
(51) Int. Cl.: A01G 3/053

(54) **Motorbetriebenes Gartenwerkzeug, insbesondere Heckenschere**

(30) Priorität: 10.06.1999 DE 19926375
(71) Anmelder: GARDENA Kress + Kastner GmbH, D-89079 Ulm (DE)
(72) Erfinder:
(74) Vertreter: Patentanwälte Ruff, Beier und Partner

(57) **Zusammenfassung**

Es wird eine handgehaltene, motorbetriebene Heckenschere beschrieben, die eine einen Motor aufweisende Antriebseinrichtung und eine durch den Motor antreibbare Werkzeuganordnung hat, die mit einer Handgriffanordnung mit mindestens einen Handgriff verbunden ist. Das Gerät hat mindestens eine Schalteranordnung zur Schaltung des Gartenwerkzeuges und zeichnet sich dadurch aus, daß die Schalteranordnung (20) mindestens einen Schalter (25) aufweist, dem mindestens ein im Bereich eines Handgriffes (7) angeordnetes Betätigungsorgan (22) zugeordnet ist, das in beliebiger Winkelposition einer den Handgriff (7) haltenden Hand durch die Hand betätigbar ist. Durch das vorzugsweise als Drehring am antriebszugewandten Ende des Handgriffes ausgebildete Betätigungsorgan ist eine bequeme Schaltung des Gerätes bei allen Gerätepositionen möglich.

## Beschreibung

Die Erfindung betrifft ein motorbetriebenes Gartenwerkzeug, insbesondere eine Heckenschere, nach dem Oberbegriff von Anspruch 1.

Handgehaltene Gartenwerkzeuge dieser Art haben eine mit einem Elektromotor oder Verbrennungsmotor ausgestattete Antriebseinrichtung und eine durch den Motor antreibbare Werkzeuganordnung, die normalerweise langgestreckt oder schwertförmig ist und gegeneinander bewegliche Werkzeugteile haben kann. Die Werkzeuganordnung arbeitet bzw. schneidet typischerweise in einer Arbeitsebene, die die Längsachse der Werkzeuganordnung enthält. Zum Halten und Führen des Motorwerkzeuges ist eine mit der Antriebseinrichtung verbundene Handgriffanordnung mit mindestens einem Handgriff vorgesehen. Zur Schaltung des Gartenwerkzeuges ist mindestens eine Schalteranordnung mit einem oder mehreren Schaltern vorgesehen, welche in der Regel als Druckschalter ausgebildet sind. Schalter können zum Beispiel entlang eines eine Grifföffnung umschließenden Bügels am hinteren Geräteende angeordnet sein. Typisch für Heckenscheren ist eine Sicherheits-Zweihand-Bedienung mit weiteren Schaltern an einem näher an der Werkzeuganordnung angeordneten Bügel, der mehrere Griffpositionen ermöglicht, wobei die Betätigungsrichtung dieser Druckschalter in der Regel quer zur Längsachse der Werkzeuganordnung liegt. Die Schalter am hinteren Handgriff und am Bügel sind zweckmäßig mechanisch oder elektrisch derart gekoppelt, daß eine Inbetriebnahme und Inbetriebhaltung des Gerätes nur bei gleichzeitiger Betätigung von Schaltern an beiden Griffmöglichkeiten möglich ist. Heckenscheren mit Schalteranordnungen dieser Art sind beispielsweise in den deutschen Patentanmeldungen DE 196 22 594 und DE 196 40 653 gezeigt.

Heckenscheren werden in verschiedenen Ausrichtungen der Arbeits- oder Schneidebene ihrer Werkzeuganordnung bzw. Messeranordnung eingesetzt, um beispielsweise vertikale oder horizontale Begrenzungsflächen von Hecken zu erzeugen, aber auch um Hecken oder Sträucher in eine gewünschte komplexere Form zu bringen. Dabei können auch unbequeme Gerätehaltungen erforderlich sein, um beispielsweise beim Überkopfarbeiten, bei welchem das Gerät mit nach oben gerichteten Armen über den Kopf des Benutzers geführt wird, die gewünschten Schnitte auszuführen. Die Handhabung bei derart extremen Gerätehaltungen kann bei herkömmlichen Geräten schwierig oder umständlich sein, insbesondere auch im Hinblick auf die Betätigung der Schalter.

Der Erfindung liegt die Aufgabe zugrunde, ein Gartenwerkzeug der eingangs erwähnten Art zu schaffen, das sich durch hervorragende Handhabung insbesondere auch im Hinblick auf verschiedene Gerätepositionen im Einsatz auszeichnet.

Diese Aufgabe wird bei einem gattungsgemäßen Gartenwerkzeug erfindungsgemäß dadurch gelöst, daß eine Schalteranordnung mindestens einen Schalter aufweist, dem mindestens ein im Bereich eines Handgriffs angeordnetes Betätigungsorgan zugeordnet ist, das, bezogen auf den Handgriffumfang, in beliebigen Winkelpositionen einer den Handgriff haltenden Hand durch die Hand betätigbar ist. Dadurch wird der Schalter, der dem Betätigungsorgan zugeordnet ist und durch dieses betätigt wird, von jeder Stelle des Handgriffumfangs aus bequem betätigbar. Es kann für einen Handgriff ein einziges Betätigungsorgan ausreichen, um eine bequeme Schalterbetätigung durch die den Handgriff sicher und fest umgreifende Hand zu ermöglichen.

Gemäß einer bevorzugten Weiterbildung der Erfindung weist das Betätigungsorgan einen den Handgriff umschließenden Ring auf, der an seiner Außenseite griffgünstig profiliert bzw. strukturiert sein kann. Dadurch kann erreicht werden, daß, bezogen auf eine Handgrifflängsachse, alle Radialrichtungen bzgl. der Betätigung des Betätigungsorganes im wesentlichen gleichwertig sind, so daß ohne Rücksicht auf die Schalterbetätigung die jeweils für die Haltefunktion günstigste Handstellung eingenommen werden kann.

Es kann zum Beispiel mittels eines derartigen Ringes eine Schiebeschaltereinrichtung geschaffen werden, bei der die Schalterbetätigung durch Längsverschiebung des Betätigungsorganes beispielsweise parallel zur Handgrifflängsachse erfolgt. Besonders bevorzugt ist es, wenn das Betätigungsorgan, insbesondere der Ring, um die Handgrifflängsachse drehbar ist. Dadurch kann ein Drehschalter geschaffen werden, der besonders vorteilhaft beispielsweise durch einen Daumen betätigt werden kann, ohne daß die den Handgriff umgreifende Hand verschoben werden muß.

Besonders im Zusammenwirken mit einem Drebschalter hat sich ein Handgriff bewährt, der zumindest in einem Griffbereich eine, bezogen auf eine Handgrifflängsachse, im wesentlichen drehsymmetrische Außenkontur hat. Durch die Abwesenheit von asymmetrischen Griffmulden o.dgl., wie sie bei Handgriffen herkömmlicher Geräte häufig vorgesehen sind, wird bei im wesentlichen rotationssymmetrischen Handgriffen jede Griffposition bzw. Winkelposition am Handgriff gleichberechtigt, wobei die bequeme Handhabung für Linkshänder wie für Rechtshänder gleichermaßen gegeben ist.

Bei einer bevorzugten Ausführungsform ist vorgesehen, daß der Handgriff auf einer der Werkzeuganordnung abgewandten Seite der Antriebseinheit von dieser abstehend angeordnet ist, wobei vorzugsweise das Betätigungsorgan zwischen einem Griffbereich des Handgriffes und der Antriebseinrichtung, also am gerätezugewandten Ende des Handgriffs angeordnet ist. Der Handgriff kann ein weitgehend freies Ende des Gerätes nach Art eines Endabschnittes eines Schippenstiels o.dgl. bilden, was das Umgreifen zwischen verschiedenen Griffpositionen erleichtern kann. Auch bügelartig geschlossene Handgriffe sind möglich.

Ein weiterer Beitrag zur sicheren und bequemen Handhabung der Schalteranordnung wird bei einer bevorzugten Weiterbildung dadurch erreicht, daß der Schalter, ausgehend von einer Ruhestellung des Betätigungsorgans, durch Bewegen des Betätigungsorgans in unterschiedliche, insbesondere einander entgegengesetzte Richtungen, insbesondere Drehrichtungen, betätigbar ist. Insbesondere kann das Betätigungsorgan zum Einschalten des Gerätes aus einer stabilen Mittenstellung, in die das Betätigungsorgan beispielsweise mittels Federkraft selbsttätig bei Loslassen zurückstellt, in beide Drehrichtungen verdrehbar sein. Bei derart bidirektional wirkenden Schaltern kann ein Benutzer die jeweils anatomisch günstigere Betätigungsrichtung wählen.

Es ist möglich, den Handgriff starr bzw. unbeweglich bzgl. der Antriebseinheit und/oder der Werkzeuganordnung auszubilden. Bei bevorzugten Ausführungsformen ist dagegen der Handgriff relativ zu der Werkzeuganordnung und/oder der Antriebseinrichtung richtungsverstellbar und in unterschiedlichen Ausrichtungen feststellbar. Eine mehrachsige Verstellung beispielsweise mit einem feststellbaren Kugelgelenk ist möglich. Vorzugsweise ist der Handgriff um eine quer zur Handgrifflängsachse verlaufende Schwenkachse schwenkbar, die insbesondere im wesentlichen parallel zur Arbeitsebene der Werkzeuganordnung liegen kann. Durch mindestens einen richtungsverstellbaren Handgriff können die Variationsmöglichkeiten bzgl. der Griffpositionen weiter erhöht und es kann ein ermüdungsfreies Arbeiten auch in ungewöhnlichen Gerätepositionen ermöglicht werden.

Bei einer bevorzugten Ausführungsform ist zwischen dem Handgriff und der Werkzeuganordnung, insbesondere zwischen Handgriff und Antriebseinrichtung, eine Schwenkvorrichtung zum Schwenken des Handgriffes und eine Feststellvorrichtung zum Feststellen des Handgriffes in unterschiedlichen, insbesondere, z.B. durch eine Rasterung vorbestimmten Winkelstellungen vorgesehen. Die Schwenkvorrichtung kann ein erstes, dem Handgriff zugeordnetes Gelenkteil und ein mit dem ersten Gelenkteil schwenkbar verbundenes zweites, der Antriebseinrichtung zugeordnetes Gelenkteil haben und die Feststelleinrichtung kann eine oder mehrere bewegliche Feststellelemente zum Feststellen der Gelenkteile relativ zueinander bzw. für die Freigabe der Gelenkbewegung haben. Insbesodere wenn eine stufenlose Verstellung erwünscht ist, können die beiden Gelenkteile so ausgebildet sein, daß sie kraftschlüssig bzw. reibschlüssig relativ zueinander feststellbar sind. Bevorzugt ist jedoch eine formschlüssige Verriegelung der Gelenkteile in gerasterten Winkelpositionen. Eine formschlüssige Verriegelung hat unter anderem den Vorteil, daß mit geringen Bedienkräften eine sichere Verriegelung, die auch hohe Kräfte aufnehmen kann, erreicht werden kann. Es kann beispielsweise ein Feststellelement bzw. Entriegelungselement vorgesehen sein, das insbesondere in eine die Gelenkteile formschlüssig verriegelnde Feststellposition vorgespannt ist und das so ausgebildet ist, daß die Gelenkteile durch Betätigung des Feststellelementes, insbesondere durch Drücken des Feststellelementes, freigebbar, insbesondere entriegelbar sind. Es können auch mehrere Feststellelemente vorgesehen sein, wobei ein oder mehrere Feststellelemente integral an einem oder beiden der Gelenkteile ausgebildet oder als gesonderte Bauteile gefertigt sein können. Beispielsweise kann eine Schwenkvorrichtung nach Art der in der DE 196 40 653 gezeigten Schwenkvorrichtung aufgebaut sein, deren Merkmale durch Bezugnahme zum Gegenstand der Anmeldung gemacht werden.

Obwohl erfindungsgemäße Gartenwerkzeuge Handgriffanordnungen mit einem einzigen Handgriff haben können, hat eine bevorzugte Handgriffanordnung mindestens zwei, vorzugsweise genau zwei mit Abstand zueinander angeordnete Handgriffe, die sich in unterschiedliche Richtungen erstrecken, wobei einer der Handgriffe oder beide bzgl. Ausrichtung und/oder Position relativ zur Antriebseinheit und/oder zur Werkzeuganordnung einstellbar und feststellbar sein können. Der zweite Handgriff bzw. Halte- oder Tragegriff ist vorteilhaft in Abstand vor dem ersten Handgriff und/oder zwischen dem ersten Handgriff und der Werkzeuganordnung angeordnet und kann einen oder mehrere im Winkel aneinander anschließende Griffabschnitte aufweisen, die alle quer zu den genannten Längsrichtungen liegen können. Ein Griffabschnitt dieses Griffes liegt zweckmäßig quer zur Längsrichtung des stiel- bzw. stabförmigen hinteren Handgriffes, was eine besonders sichere Führung des Gerätes ermöglicht. Auch an dem weiteren Handgriff können ein oder mehrere Betätigungsorgane für Schalter vorgesehen sein. Ein vorderer Handgriff kann insbesondere wie derjenige der in der DE 196 40 653 oder der DE 196 22 594 gezeigten Heckenschere ausgebildet sein, deren Merkmale insoweit durch Bezugnahme zum Gegenstand dieser Anmeldung gemacht werden.

Zur Erhöhung der Handhabungssicherheit des Gartenwerkzeuges kann vorgesehen sein, daß die Schwenkvorrichtung, insbesondere die Feststellvorrichtung, derart ausgebildet ist, daß ein Verschwenken des Handgriffs nur dann möglich ist, wenn der Schalter der Schalteranordnung in Ruhestellung bzw. AUS-Stellung ist und/oder daß die Schalteranordnung derart ausgebildet ist, daß eine Betätigung mindestens eines Schalters aus der Ruhestellung in eine Einschaltstellung nur bei festgestellter Schwenkvorrichtung möglich ist. Insbesondere können die Schalterbetätigung eines Drehschalters einerseits und die Verstellung des Handgriffes bzgl. seiner Schwenkachse andererseits mechanisch so gekoppelt sein, daß bei aus der Ruhestellung verdrehtem Schalter kein Lösen der Arretierung der Verschwenkung möglich ist und umgekehrt. Hierzu ist bei einer Ausführungsform das Feststellelement der Schwenkvorrichtung, insbesondere über einen Kipphebel, mechanisch mit dem Betätigungsorgan des Schalters derart gekoppelt, daß eine Bewegung des Feststellelementes in Freigabeposition eine Verriegelung des Betätigungsorganes bewirkt bzw. andererseits eine Bewegung in Freigabestellung nicht möglich ist, solange der Schalter nicht in seiner Ruhestellung ist. Es kann also das Betätigungsorgan durch die Schwenkvorrichtung, insbesondere durch ein mittels der Feststelleinrichtung betätigbares Verriegelungselement verriegelt bzw. festgestellt werden. Die hierdurch geschaffenen Einschränkungen der freien Handhabung des Gerätes machen die Handhabung besonders sicher, da ein Benutzer nicht irrtümlich die Werkzeuganordnung oder den Antrieb einschalten kann, während noch an der Verstellung des Handgriffes zur Einstellung der bequemsten Griffposition gearbeitet wird.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen verwirklicht sein und vorteilhafte Ausführungen darstellen können.

Nachfolgend wird die Erfindung anhand eines Ausführungsbeispiels und zugehöriger Zeichnungen näher erläutert. In den Zeichnungsfiguren zeigen:
- Fig. 1: eine Seitenansicht einer bevorzugten Ausführungsform einer erfindungsgemäßen Heckenschere mit verschwenkbarem hinteren Handgriff und Drehschalter,
- Fig. 2: eine Draufsicht in teilweisem Schnitt auf den Bereich des Drehschalters und der Schwenkvorrichtung der in Fig. 1 gezeigten Ausführungsform,
- Fig. 3: einen Schnitt durch die Drehschalteranordnung entlang der Linie III-III in Fig. 2,
- Fig. 4: einen Schnitt durch die Drehschalteranordnung entlang der Linie IV-IV in Fig. 2 und
- Fig. 5: einen Schnitt durch die Drehschalteranordnung entlang der Linie V-V in Fig. 2.

Die Erfindung wird an Beispiel einer elektromotorisch betriebenen Heckenschere 1 beschrieben. Diese besitzt eine Antriebseinrichtung 2, bei der innerhalb eines Kunststoff-Gehäuses der netzabhängig betriebene Elektromotor mit einer in der gezeigten Darstellung senkrechten Motorachse 3 angeordnet ist. Der Motor treibt über ein in der Antriebseinrichtung untergebrachtes Getriebe eine an Vorderende der Antriebseinrichtung aus dieser herausragende, schwertartige Werkzeuganordnung 4 an, die in einer senkrecht zur Motorachse 3 ausgerichteten Arbeitsebene arbeitet und deren Länge mehrfach größer sein kann als die Länge der Antriebseinrichtung. Das Exzentergetriebe zwischen Motor und Messeranordnung 4 wandelt die rotatorische Antriebsbewegung des Elektromotors in eine translatorische Scherbewegung der Schneidwerkzeuge um, wobei sich die gezahnten Schneidwerkzeuge im wesentlichen parallel zur Längsachse der Werkzeuganordnung 4 bewegen. Alternativ zu einem balken- bzw. blattartigen Schneidwerkzeug könnte das handgehaltene Gartenwerkzeug zum Beispiel auch nach dem Kreissägenprinzip arbeiten.

Zum Halten und Führen des Gerätes ist eine Handgriffanordnung mit zwei mit der Antriebseinrichtung 2 beweglich verbundenen Griffteilen bzw. Handgriffen 6, 7 vorgesehen, von denen der vordere Handgriff 6 zwischen Motor und Werkzeuganordnung und der hintere Handgriff 7 auf der werkzeugabgewandten Seite am hinteren Ende der Antriebseinrichtung angeordnet ist. Dadurch liegt das Gewicht des Elektromotors zwischen den Handgriffen, was das Tragen und Führen des Gerätes erleichtert.

Das vordere Griffteil 6 ist im wesentlichen als ringförmiger, im Querschnitt trapezförmiger Bügel ausgebildet, der einen sich quer über die Längsrichtung des Gerätes bzw. senkrecht zur Messeranordnung 4 erstreckenden oberen Griffabschnitt oder Greifabschnitt 8 sowie zwei seitliche, in der gezeigten Stellung nach vorne geneigte Griffabschnitte besitzt, die mit dem oberen Griffabschnitt verbunden sind und diesen mit dem Gehäuse der Antriebseinrichtung 2 verbinden.

Das hintere Griffteil 7 ist nach Art eines Stielgriffes mit freiem Ende ausgebildet und damit von allen Radialrichtungen gleichermaßen frei zugänglich. Der Handgriff besitzt einen zur Handgrifflängsachse 9 rotationssymmetrischen, geringfügig tonnenförmig nach außen gewölbten Griffabschnitt oder Greifabschnitt 10, an dessen hinterem Ende zur Abrutschsicherung drei umlaufende Wülste ausgebildet sind. Bei netzabhängig betreibbaren Ausführungsformen ragt ein elektrisches Anschlußkabel 11 aus dem Hinterende des Handgriffs 7 heraus, durch den hindurch elektrische Leitungen zum Motor führen. Es sind auch netzunabhängig betreibbare erfindungsgemäße Geräte möglich, bei denen beispielsweise im Inneren des hinteren Handgriffs ein Energiespeicher, z.B. ein Akkumulator, untergebracht sein kann. Auch Ausführungen mit Verbrennungsmotor sind möglich.

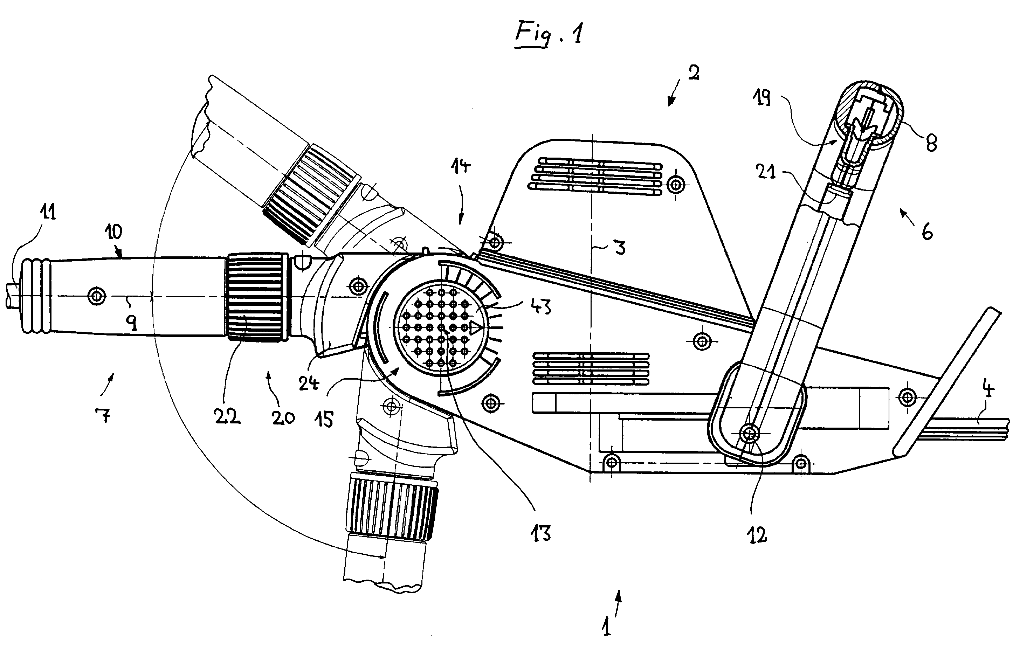

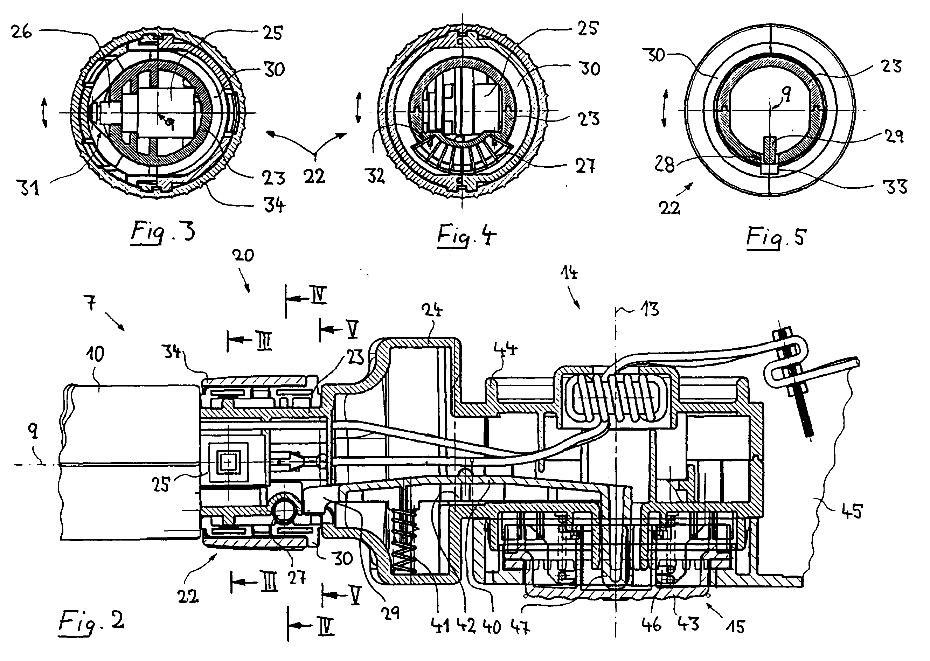

Um eine möglichst bequeme Arbeitshaltung bei allen gewünschten Ausrichtungen der Werkzeuganordnung zu ermöglichen, sind die Handgriffe 6, 7 der Handgriffanordnung jeweils bzgl. der Antriebseinheit 2 und damit relativ zueinander einstellbar und in unterschiedlichen Stellungen feststellbar. Das vordere Griffteil kann dabei um eine Achse 12, die durch die Befestigungspunkte des Griffteils an der Antriebseinrichtung bestimmt ist und sich parallel zur Arbeitsebene der Werkzeuganordnung erstreckt, nach vorne und hinten geschwenkt werden. Auch der hintere Handgriff 7 kann um eine parallel zur Arbeitsebene der Werkzeuganordnung und parallel zur Achse 12 verlaufende Schwenkachse 13 geschwenkt werden, wobei der in Fig. 1 angedeutete Schwenkbereich insgesamt ca. 120° beträgt. Ausgehend von der gezeigten Grundstellung parallel zur Werkzeuganordnung reicht der Schwenkbereich ca. 40° nach oben und fast 90° nach unten. Insbesondere in Verbindung mit der Verstellbarkeit des vorderen Handgriffs ist hierdurch ein ermüdungsfreies Arbeiten auch in ungewöhnlichen Gerätepositionen möglich. Die dem hinteren Handgriff zugeordnete Schwenkvorrichtung 14, die mit einer Feststellvorrichtung 15 zusammenwirkt, wird in Zusammenhang mit Fig. 2 später erläutert.

Um den Antrieb der Heckenschere ein- und auszuschalten, ist eine Sicherheits-Zweihand-Schaltung vorgesehen. Diese umfaßt eine dem vorderen Handgriff 6 zugeordnete vordere Schalteranordnung 19 und eine dem hinteren Handgriff zugeordnete hintere Schalteranordnung 20, die unabhängig voneinander jeweils mit der den zugeordneten Handgriff haltenden Hand zu bedienen sind und die derart zusammenwirken, daß ein Betrieb der Heckenschere, insbesondere eine Einschaltung des Motors, nur bei Betätigung von Schaltern beider Schalteranordnungen möglich ist. Die dem vorderen Griffteil zugeordnete Schalteranordnung 19 hat Schalttasten bzw. -hebel 21, die beim Umgreifen des Griffteiles in dessen Inneres gedrückt werden können und dort auf entsprechende Mikroschalter wirken. Die Schalttaste 21 am vorderen Griffteil, die mehrteilig sein kann, ist auf einer Innenseite des ringförmigen Griffteils angeordnet und kann sich sowohl an dem oberen Greifabschnitt 8, als auch an den beiden seitlichen Greifabschnitten erstrecken. Dadurch ist es möglich, den Schalter der Schalteranordnung bei verschiedenen Griffpositionen am Haltebügel bequem zu bedienen, ohne den Bügel loszulassen.

Die in den Figuren 2 bis 5 im Detail dargestellte hintere Schalteranordnung 20 hat als Betätigungsorgan einen Drehring bzw. Schaltring 22, der an dem dem Gerät bzw. der Antriebseinrichtung 2 zugewandten Endbereich des Handgriffs 7 angeordnet ist. Dadurch ist einerseits eine feste Griffposition gegeben, andererseits ist eine Betätigung des Schalters in beliebiger Winkelposition der Hand bzgl. der Handgrifflängsachse 9 möglich, indem beispielsweise der Daumen der den Handgriff haltenden Hand durch seitliche Schwenkung den Drehring dreht. Die Figuren 2 bis 5 zeigen das Betätigungsorgan 22 in einer der Ruhestellung des Drehschalters entsprechenden Drehstellung.

Der mit zwei spritzgegossenen Kunststoff-Halbschalen aufgebaute hintere Handgriff 7 hat anschließend an das antriebszugewandte Ende des Greifabschnittes 10 eine Durchmesserverjüngung 23 mit im wesentlichen zylindrischer Außenkontur, an die sich zum Antrieb hin eine als vordere Abrutschsicherung dienende heftartige Verbreiterung 24 anschließt. Die einstückig mit den Handgriff-Halbschalen ausgebildete Durchmesserverjüngung 23 dient als feststehender Träger der diesen Abschnitt umschließenden drehbeweglichen Teile der Drehschalteranordnung 20, die innerhalb einer im Bereich der Verjüngung 23 ausgebildeten Rechteck-Umfangsnut eingesetzt und durch die Nut axial und in Umfangsrichtung geführt sind. In das Innere der Durchmesserverjüngung 23 ist ein elektrischer Mikroschalter 25 eingesetzt, der einen als Betätigungsorgan für den Schalter wirkenden Schalterstift 26 hat, der senkrecht zur Handgrifflängsachse 9 gegen die Kraft einer Feder verschiebbar ist und radial über die Außenkontur des feststehenden Trägers 23 hinausragt (Fig. 3). Unmittelbar vor dem Schalterbereich ist am Umfang des Abschnittes 23 eine ca. 120° umfassende, im Querschnitt etwa halbkreisförmige Aussparung vorgesehen, in der eine kreisbogenförmig gekrümmte Schraubendruckfeder 27 eingesetzt ist, die sich an den Umfangsrändern der Ausnehmung abstützt (Fig. 4). Unmittelbar vor der Federaufnahme ist eine radial durchgehende, schlitzförmige Öffnung 28 gebildet, durch die ein später erläutertes Verriegelungsglied 29 nach außen hindurch bewegbar ist (Fig. 5).

Auf den Trägerabschnitt 23 ist ein Innenring 30 des Betätigungsorgans 22 in Umfangsrichtung gleitbeweglich aufgesetzt. Dieser hat im Bereich des Schalterstiftes 26 eine schalterzugewandte, zur Radialrichtung symmetrische, V-förmige Ausnehmung 31 und im Bereich der Spiraldruckfeder 27 eine zum Trägerabschnitt bzw. zur Feder geöffnete Ausnehmung 32, deren Umfangslänge derjenigen der Federaufnahmeausnehmung des gehäusefesten Teils 23 entspricht. Auf Höhe des Durchlasses 28 für das Verriegelungsglied 29 ist eine dem feststehenden Teil 23 zugewandte Aussparung 33 ausgebildet. Ein drehfest mit dem Innenring außen auf diesen aufgesetzter Außenring 34 hat an seiner Außenseite regelmäßig beabstandete Längsrippen, die dem aus mehreren Bauteilen zusammengesetzten Betätigungsorgan 22 des Drehschalters eine griffgünstige Außenkontur verleihen.

Der Drehschalter ist zum Einschalten des Gerätes aus einer in den Figuren 2 bis 5 dargestellten, stabilen Mittenstellung in beide Umfangsrichtungen verdrehbar. Die bidirektionale Verdrehbarkeit mit selbsttätiger Rückstellung in die Mittenstellung bzw. AUS-Stellung wird mit Hilfe der Spiraldruckfeder 27 erreicht, die bei Drehung des Betätigungsorganes einseitig durch einen Rand der Ausnehmung 32 des Innenrings 30 mitgenommen wird, sich mit dem gegenüberliegenden Ende am feststehenden Trägerabschnitt 23 abstützt und dadurch zusammengedrückt wird. Bei der Drehung des Betätigungsorgans aus der Mittelstellung wird gleichzeitig der Schalterstift 26 durch die als Schaltkurve dienende Ausnehmung 31 nach innen zum Schalter hin gedrückt. Wegen der Symmetrie der Kurvenflanken der Schaltausnehmung 31 und der Symmetrie der Rückstellfederanordnung 27 bzgl. einer Radialrichtung sind beide Schaltrichtungen, bezogen auf die Ruhestellung, gleichberechtigt und bewirken jeweils eine Schalterbetätigung. Dadurch ist es für einen Benutzer möglich, die jeweils anatomisch günstigere Drehrichtung zur Betätigung des Schalters zu wählen. Da das Betätigungsorgan 22 den Handgriff völlig umschließt, ist eine Schalterbetätigung in beliebiger Winkelposition der Hand bzgl. der Handgrifflängsachse 9 möglich.

Besonders zu erwähnen ist noch, daß der Drehschalter nicht betätigbar bzw. festgesetzt ist, wenn in der Ruhestellung die Sperrzunge 29 nach außen gedrückt ist und in die Aussparung 33 eingreift (Fig. 5). Umgekehrt ist dann, wenn sich der Drehschalter im ausgelenkten Zustand befindet, in dem die Aussparung in Umfangsrichtung gegen den Schlitz 28 versetzt ist, eine Betätigung des Verriegelungsgliedes 29 bzw. eine Bewegung desselben radial nach außen nicht möglich, da die radiale Außenseite des Verriegelungsgliedes an die Innenseite des Innenringes 30 anstößt.

Das Verriegelungsglied 29 wird durch ein Ende einer in Fig. 2 gut zu erkennenden Sperrwippe 40 gebildet, die durch eine im Bereich der Gehäuseverbreiterung 24 angeordnete Spiraldruckfeder 41 in die in Fig. 5 gezeigte Freigabestellung vorgespannt ist. Deren bezogen auf das Kipplager 42 gegenüberliegendes Ende ragt in den Bereich der Schwenkvorrichtung 14 und weist einen nach außen gerichteten nasenförmigen Ansatz 47 auf, der sich an der Innenseite einer Entriegelungsplatte 43 abstützt, so daß der Kipphebel 40 durch die Entriegelungsplatte 43 der Feststellvorrichtung 15 betätigbar ist.

Genauer hat die Schwenkvorrichtung ein einstückig mit den Handgriff-Halbschalen ausgebildetes erstes Gelenkteil 44 und ein einstückig mit dem Gehäuse der Antriebseinrichtung ausgebildetes zweites Gelenkteil 45, das gegenüber dem ersten Gelenkteil um die Schwenkachse 13 verdrehbar ist. Die Gelenkteile sind durch geeignete Rastverzahnungen o.dgl. so ausgebildet, daß sie in verschiedenen, fest vorgegebenen Winkelstellungen, die beispielsweise in 10°- bis 15°-Schritten gerastert sein können, miteinander verriegelbar sind. Die Verriegelung wird durch die Entriegelungsplatte 43 unterstützt, die parallel zur Schwenkachse 13 verschiebbar im äußeren, zweiten Gelenkteil 45 geführt ist und durch eine kräftige Schraubendruckfeder 46 in die äußere Verriegelungsstellung gedrückt wird. Bei Drücken der Entriegelungsplatte 43 gegen die Kraft der Feder 46 nach innen wird die Verriegelung der Gelenkteile aufgehoben und es ist eine relative Verschwenkung von Antriebseinheit und hinterem Handgriff 7 um die Schwenkachse 13 möglich. Wird die Entriegelungsplatte 43 freigegeben, so tritt selbsttätig eine Arretierung der Schwenkvorrichtung ein.

Bei der gezeigten Ausführungsform ist die Bewegung der Entriegelungsplatte über die Sperrwippe 40 mit der Bewegung des Drehrings 22 so gekoppelt, daß einerseits eine Entriegelung nur bei Ruhestellung des Drehschalters möglich ist und andererseits bei entriegelter Gelenkvorrichtung keine Betätigung des Drehschalters aus seiner Ruhelage heraus möglich ist. Dadurch kann zuverlässig verhindert werden, daß das Gerät in Betrieb gesetzt wird, solange ein Bediener noch mit der richtigen Einstellung des Handgriffs 7 beschäftigt ist. Die Sperrwippe 40 weist hierzu an ihrem der Sperrzunge 29 gegenüberliegenden Ende den nasenförmigen Vorsprung 47 auf, der durch eine koaxial mit der Schwenkachse 13 ausgebildete Gehäuseöffnung des ersten Gelenkteils 44 nach außen ragt und sich mit seiner freien Vorderseite an der Innenseite der Verriegelungsplatte abstützt. Die Druckfeder 41 sorgt dabei jederzeit für einen sicheren Andrückkontakt zwischen Sperrwippe und Entriegelungsplatte 43. In der in Fig. 2 gezeigten Verriegelungsstellung des Schwenkgelenks 14 befindet sich der Nasenabschnitt 47 der Sperrwippe in seiner Außenstellung und der Verriegelungsabschnitt 29 in der in Fig. 5 gezeigten Freigabestellung, bei der eine Drehung des Drehschalters möglich ist. Wird in der Ruhestellung des Drehschalters die Entriegelungsplatte parallel zur Achse 13 nach innen gedrückt, so bewirkt dies eine Verkippung des Hebels 40 im Lager 42 und eine radiale Bewegung des Verriegelungsgliedes 29 nach außen in die Ausnehmung 33, wodurch der Drehring festgesetzt und eine Verdrehung desselben verhindert wird. Alternativ oder zusätzlich zu dieser ausschließlich mechanischen Kopplung kann diese Sicherung auch mit Hilfe von elektrischen oder elektronischen Mitteln erreicht werden.

## Patentansprüche

1. Motorbetriebenes Gartenwerkzeug, insbesondere Heckenschere, mit einer einen Motor aufweisenden Antriebseinrichtung und einer durch den Motor antreibbaren Werkzeuganordnung, die mit einer Handgriffanordnung mit mindestens einem Handgriff verbunden ist, sowie mit mindestens einer Schalteranordnung zur Schaltung des Gartenwerkzeuges, dadurch gekennzeichnet, daß eine Schalteranordnung (20) mindestens einen Schalter (25) aufweist, dem mindestens ein im Bereich eines Handgriffes (7) angeordnetes Betätigungsorgan (22) zugeordnet ist, das in beliebiger Winkelposition einer den Handgriff (7) haltenden Hand durch die Hand betätigbar ist.

2. Gartenwerkzeug nach Anspruch 1, dadurch gekennzeichnet, daß das Betätigungsorgan (22) mindestens einen den Handgriff (7) umschließenden Ring aufweist, vorzugsweise mit einer griffgünstig strukturierten Außenseite.

3. Gartenwerkzeug nach Anspruch 1 oder 2, dadurch gekennzeichnet, daß das Betätigungsorgan, insbesondere der der Ring (22), um eine Handgrifflängsachse (9) des Hand griffs (7) drehbar ist.

4. Gartenwerkzeug nach einem der vorhergehenden Ansprüche, dadurch gekennzeichnet, daß der Handgriff (7) zumindest in einem Griffbereich (10) eine, bezogen auf eine Handgrifflängsachse (9), im wesentlichen drehsymmetrische Form hat.

5. Gartenwerkzeug nach einem der vorhergehenden Ansprüche, dadurch gekennzeichnet, daß der Handgriff (7) auf einer der Werkzeuganordnung (4) abgewandten Seite der Antriebseinheit (2) von dieser abstehend angeordnet ist, wobei vorzugsweise das Betätigungsorgan (22) zwischen einen Griffbereich (10) des Handgriffs (7) und der Antriebseinrichtung (2) angeordnet ist.

6. Gartenwerkzeug nach einem der vorhergehenden Ansprüche, dadurch gekennzeichnet, daß ein durch das Betätigungsorgan (22) betätigbarer Schalter (25), ausgehend von einer Ruhestellung des Betätigungsorgans, durch Bewegung des Betätigungsorganes (22) in unterschiedliche, insbesondere einander entgegengesetzte Richtungen, insbesondere Drehrichtungen, betätigbar ist.

7. Gartenwerkzeug nach einem der vorhergehenden Ansprüche, dadurch gekennzeichnet, daß der Handgriff (7) relativ zu der Werkzeuganordnung (4) und/oder der Antriebseinrichtung (2) richtungsverstellbar, insbesondere um eine quer zur Handgrifflängsachse (9) verlaufende Schwenkachse (13) schwenkbar, und in unterschiedlichen Ausrichtungen zur Werkzeuganordnung und/oder zur Antriebseinrichtung feststellbar ist.

8. Gartenwerkzeug nach einem der vorhergehenden Ansprüche, dadurch gekennzeichnet, daß zwischen dem Handgriff (7) und der Werkzeuganordnung (4), insbesondere zwischen dem Handgriff und der Antriebseinrichtung (2), eine Schwenkvorrichtung (14) zum Schwenken des Handgriffs und eine Feststellvorrichtung (15) zum Feststellen des Handgriffs in unterschiedlichen, insbesondere vorbestimmten, Winkelstellungen, vorgesehen sind.

9. Gartenwerkzeug nach Anspruch 8, dadurch gekennzeichnet, daß die Schwenkvorrichtung (14) ein erstes, dem Handgriff (7) zugeordnetes Gelenkteil (44) und ein mit dem ersten Gelenkteil schwenkbar verbundenes zweites, der Antriebseinrichtung zugeordnetes Gelenkteil (45) aufweist, und daß die Feststellvorrichtung (14) mindestens ein Feststellelement (43) zum Feststellen der Gelenkteile relativ zueinander aufweist, wobei vorzugsweise das Feststellelement (43) in eine die Gelenkteile (44, 45) feststellende, insbesondere formschlüssig verriegelnde Verriegelungsposition vorgespannt ist und die Gelenkteile durch Betätigung, insbesondere durch Drücken des Feststellelementes freigebbar, insbesondere entriegelbar sind.

10. Gartenwerkzeug nach einem der vorhergehenden Ansprüche, dadurch gekennzeichnet, daß die Handgriffanordnung mindestens zwei mit Abstand zueinander angeordnete Handgriffe (7, 6) aufweist, die sich in unterschiedliche Richtungen erstrecken, wobei vorzugsweise beide Handgriffe einstellbar und feststellbar sind.

11. Gartenwerkzeug nach einem der Ansprüche 8 bis 10, dadurch gekennzeichnet, daß die Schwenkvorrichtung und die Feststellvorrichtung derart ausgebildet sind, daß eine Freigabe der Schwenkvorrichtung zum Verschwenken des Handgriffes (7) nur bei einer Ruhestellung des Betätigungsorgans (22) möglich ist und/oder daß die Schalteranordnung (20) derart ausgebildet ist, daß eine Betätigung des Betätigungsorganes (22) aus der Ruhestellung nur bei festgestellter Schwenkvorrichtung möglich ist.

12. Gartenwerkzeug nach einem der Ansprüche 8 bis 11, dadurch gekennzeichnet, daß das Feststellelement (43), mit dem Betätigungsorgan (22) der Schalteranordnung (20) derart gekoppelt ist, daß eine Bewegung des Feststellelementes in eine Freigabestellung eine Verriegelung des Betätigungsorganes (22) in einer Ruhestellung bewirkt und daß eine Betätigung des Betätigungsorgans (22) aus einer Ruhestellung ein Festsetzen des Feststellelementes in einer Verriegelungsstellung bewirkt, wobei die Kopplung vorzugsweise mechanisch ist und insbesondere einen Schwenkhebel (40) umfaßt.
